# EUROPÄISCHE PATENTSCHRIFT

(11) **EP 1 470 372 B1**
(45) Veröffentlichungstag und Bekanntmachung des Hinweises auf die Patenterteilung: **07.04.2010**
(21) Anmeldenummer: 03700304.3
(22) Anmeldetag: 03.02.2003
(51) Int. Cl.: F24D 3/16

(54) **THERMOAKTIVES WAND- UND DECKENELEMENT**
THERMOACTIVE WALL AND CEILING ELEMENT
ELEMENT DE MUR ET DE PLAFOND THERMOACTIF

(30) Priorität: 01.02.2002 CH 175022002
(43) Veröffentlichungstag der Anmeldung: 27.10.2004
(73) Patentinhaber: Zent-Frenger Holding GmbH, 64646 Heppenheim (DE)
(72) Erfinder: KOSCHENZ, Markus, CH-8542 Wiesendangen (CH); LEHMANN, Beat, CH-8165 Schleinikon (CH); HOLST, Stefan, 70193 Stuttgart (DE)
(74) Vertreter: Schober, Christoph D.
(86) Internationale Anmeldenummer: PCT/CH2003/000081
(87) Internationale Veröffentlichungsnummer: WO 2003/064931

(56) Entgegenhaltungen:
- EP-A- 0 065 679
- DE-A- 4 005 915
- FR-A- 2 794 224
- JP-A- 07 293 908
- PATENT ABSTRACTS OF JAPAN vol. 015, no. 042 (M-1076), 31. Januar 1991 (1991-01-31) & JP 02 279926 A (SUMITOMO CHEM CO LTD), 15. November 1990 (1990-11-15)

## Beschreibung

Diese Erfindung betrifft ein thermoaktives Wand- und Deckenelement zum Verbauen in Räumen von Neu- und insbesondere Altbauten. Das Wand- und Deckenelement soll zu einer rationellen Nutzung von regenerativen Energiequellen beitragen, um das Raumklima effizienter und kostensparender den jeweiligen Bedürfnissen anzupassen. Das Element eignet sich auch für Leichtbauten, etwa für Holzbauten oder Bauten nach anderen Leichtbausystemen. Dabei ist es egal, ob das Deckenelement in Wohn-, das heisst Ein- oder Mehrfamilienhäusern, in Geschäftshäusern oder Industriegebäuden eingebaut wird. Grundsätzlich kann das Element überall dort zum Einsatz kommen, wo Räume gekühlt und/oder beheizt werden sollen. Besonders gewerblich genutzte Gebäude weisen thermisch immer besser isolierte Bauhüllen auf. Bei Umbauten und Renovationen werden die Fassaden neu gestaltet, besser isoliert und man verbaut wesentlich grössere Fensterflächen, um lichtdurchflutete Räume zu erzielen und dem Gebäude auch eine leichter, eleganter und moderner wirkende Ästhetik zu verleihen. Neubauten werden von Anfang an mit möglichst guten Wärmeisolationseigenschaften erstellt. Gleichzeitig aber hält eine zunehmende Technisierung in derartigen Gebäuden Einzug. Egal nämlich, ob die Benützer der Gebäude reine Dienstleister sind, die bloss Büroarbeiten verrichten, oder ob sie auch zum Beispiel labortechnische Untersuchungen anstellen oder auch sonstige gewerbliche oder gar industrielle Aktivitäten entfalten - es werden immer mehr elektrische Geräte installiert, die letztlich alle auch Wärme erzeugen. Diese verschiedenen Wärmeerzeuger sind etwa Kopiergeräte, Computer, Drucker, Faxgeräte, Fernseher, Videoeinrichtungen, Telekommunikationseinrichtungen, aber auch Kühlschränke, Kaffeemaschinen, Reinigungsmaschinen etc. Nicht zuletzt ist auch jede Person, die sich in einem Raum aufhält, aufgrund ihrer Körpertemperatur eine Wärmequelle und trägt zur Wärmelast bei. Zukünftig steht deshalb die Kühlung und nicht unbedingt bloss die Heizung gewerblich genutzter Gebäude infolge der thermisch immer besser isolierten Bauhüllen und den wie erwähnt höheren internen Wärmelasten durch die zunehmende Technisierung im Vordergrund. Auch bei Wohnbauten verlagert sich das Wärmemanagement der Räume in diese Richtung.

Der Wärmeabtransport aus den Räumen kann auf zwei unterschiedliche Arten erfolgen: Entweder wird der Wärmeüberschuss sogleich und unmittelbar bei seinem Anfall an ein Kühlsystem abtransportiert oder der Wärmeüberschuss wird in einen Zwischenspeicher überführt, sodass er zu einem späteren Zeitpunkt bei Bedarf wieder genutzt oder sonst definitiv an die Umgebung ausserhalb des betrachteten Raumes abgeführt werden kann. Die erste Variante benötigt Wasser oder ein anderes Kühlmittel, welches während der Zeit des Wärmeanfalls, z.B. während der Arbeitszeit, zur Verfügung stehen muss. Dieses kann speziell in der warmen Jahreszeit meist nur durch eine Kompressionskältemaschine abgekühlt werden. Die zweite Variante, das heisst das vorübergehende Zwischenspeichern von Überschusswärme, kann auf verschiedenen Wegen realisiert werden und bietet folgende Möglichkeiten: Zunächst können für die Wärmeabfuhr natürliche Wärmesenken genutzt werden, zum Beispiel nachts über einen Wärmetauscher die kalte Aussenluft, deren Temperatur dann tagsüber naturgemäss wieder ansteigt, oder aber es wird mit einer Erdsonde oder Erdpfählen eine dauerhafte Wärmesenke erzeugt, deren Temperatur stets annähernd gleich bleibt und die bei Bedarf auch als Wärmequelle genutzt werden kann, wobei namentlich das Grundwasser als solche Wärmequelle und Wärmesenke dient, je nach dem, ob gekühlt oder geheizt werden soll. Die bessere Nutzung regenerativer Energiequellen steht bei der vorliegenden Erfindung im Vordergrund, indem durch eine Zwischenspeicherung von Wärme die Zeitdifferenz zwischen der Nachfrage nach regenerativer Energie und dem Angebot ausgeglichen werden soll. Als weitere Möglichkeit kann die Nutzung einer Kältemaschine in Frage kommen, welche während des Tages zur Luftkühlung, während der Nacht jedoch zur Raumabkühlung eingesetzt wird. Diese Variante ermöglicht es auch, die Spitzenkühlleistung einer Kälteanlage wesentlich zu reduzieren, weil durch die Möglichkeit der Zwischenspeicherung nicht sofort die gesamte Kühlleistung bereitgestellt werden muss sondern diese auf einen längeren Zeitraum, zum Beispiel auf 24 Stunden, verteilt werden kann. Bei Neubauten kann die Gebäudemasse mittels wasserdurchflossener Rohre im Bauteilkern als thermischer Zwischenspeicher genutzt und optimal bewirtschaftet werden. Dies ist bei Umbauten kaum möglich, da die Deckenstrukturen bereits vorhanden sind und somit nur mit einem ausserordentlichen hohen Aufwand Rohre integriert werden können. Zudem befinden sich in solchen Räumen meist abgehängte Decken, welche einerseits Deckeninstallationen verbergen und andererseits Schallschutzfunktionen übernehmen. Um das Gebäude trotzdem effizient kühlen zu können, wird die bestehende Doppeldecke durch eine Kühldecke ersetzt.

Bekannt sind mit Wasser kühlbare Kühldecken. Sie bestehen im wesentlichen aus Blechplatten, meistens aus Stahl, Edelstahl oder Aluminium, welche mittels eines Schnappmechnismus an Wärmeleitschienen in Form von Rohr-Profilen montiert werden, die zuvor mittels eines Aufhängesystems an der Decke verlegt wurden. Diese Rohr-Profile sind Aluminium-Stangpressprofile, in denen ein Kupferrohr gut wärmeleitend eingepresst ist. Diese Rohrprofile sind an einen Kühlkreislauf angehängt und mit Wasser durchströmbar. Nach der Montage an einer Decke weisen diese Profile nach unten ragende Schenkel und Füsse auf, welche beim von unten erfolgenden Anbau der Blechplatten satt auf der Oberseite der Platten anliegen und eine Wärmebrücke bilden. Für die Montage sind die Blechplatten auf ihrer Oberseite mit einem Klemm-Profil ausgerüstet, welches in nach unten offene Stahlfederklammern am Rohrprofil einklickbar ist. Die Blechplatten können lackiert oder eloxiert sein oder bauseitig geputzt oder beklebt werden. Zur besseren Schalldämmung setzt man häufig perforierte Blechplatten mit dahinter angeordnetem Schallabsorptionsmaterial ein.

Weiter sind Kühldecken aus abklappbaren Modulen bekannt. Bei jenen sind die als Kühlelemente wirkenden Blechplatten aus Stahl, Edelstahl oder Aluminium direkt mit darauf montierten Kühlrohrsystemen ausgerüstet. Diese Module werden dann auf einer Seite schwenkbar an Systemprofile angelenkt, die zuvor an der Decke montiert wurden. Nach dem Anschllessen des Kühlrohrsystems an einen Kühlkreislauf können die Module hochgeschwenkt und in der horizontalen Lage gesichert werden, mittels eines Schnappmechanismus oder mittels Sicherungsschrauben oder -stiften.

Ein weiteres bekanntes Kühldeckensystem besteht aus einzelnen glattflächigen oder perforierten Paneelen aus allseitig am Rand nach oben abgekanteten Aluminiumblechen. In den Abkantungen sind in Längsrichtung der Kanten Kontaktflächen für verzinkte Rohrleitungen vorgesehen, die mittels Stahlklammern an den Kontaktflächen befestigt werden. Die vorgefertigten Montageeinheiten werden mit Zugankern an der Rohdecke befestigt und können bedarfsweise oben oder auf der Unterseite mit Akustikplatten zur Erzielung einer besseren Schalldämmung ausgerüstet sein, was allerdings die Kühlleistung etwas schmälert.

Weiterhin gibt es auch Lösungen, bei denen ein Kühlrohrsystem an eine Decke verlegt wird, indem die Kühlrohre von unten in zuvor an die Decke montierte, nach unten offene U-Profile eingeklickt werden. Zwischen die U-Profile werden dann von unten mit Schalldämm-Material gefüllte Blechpanelen eingehängt, welche an ihrer Unterseite einen seitlich auskragenden Rand aufweisen, sodass die Kühlrohre und Montageprofile verdeckt werden.
Darüber hinaus ist aus der JP 07293908A ein thermaktives Deckenelement bekannt, das einen geschlossenen Kasten aufweist, der zur Zwischenspeicherung von Wärme als Latentwärmespeicher ein Phasenwechselmaterial enthält, bei dem es sich um Paraphin handelt. Der Kasten ist darüber hinaus mit Wärmeleitrippen versehen. Das Deckenelement weist zudem ein Heiz- und Kühlrohr auf.

All den bekannten Systemen haftet der Nachteil an, dass ihre Wärmekapazität relativ niedrig ist und somit die Wärme beim Kühlen nicht zwischengespeichert werden kann, sondern direkt an das Kühlmittel abgeführt werden muss. Mit anderen Worten: Diese Deckenelemente dienen bloss zur effizienten Aufnahme und unmittelbaren Weiterleitung der Wärme an das Kühlrohrsystem, nicht jedoch zur temporären Zwischenspeicherung von Wärme.

Die Aufgabe der vorliegenden Erfindung ist es deshalb, ein thermoaktives Wand- und Deckenelement zur Temperierung von Räumen in Neu- und Altbauten einschliesslich Leichtbauten anzugeben, welches nicht nur die direkte Abfuhr von Wärme aus dem Raum ermöglicht, sondern deren temporäre Zwischenspeicherung erlaubt, sodass die Wärme mit zeitlicher Verzögerung gegenüber dem Wärmeanfall an die später kalt gewordene Umgebung abfliessen kann, etwa an die Umgebungsluft, die nachts als natürliche Wärmesenke wirkt. Die gespeicherte Wärme kann im Bedarfsfall auch wieder genutzt werden. Ausserdem soll dieses thermoaktive Wand- und Deckenelement eine geringe Aufbauhöhe aufweisen, in der Herstellung kostengünstig und auf der Baustelle sehr einfach montierbar sein. Es soll vielseitig einsetzbar sein und sich gut in das architektonische Konzept eines Alt- oder auch Neubaus eingliedern lassen. Im Bedarfsfall soll es auch über gute Schallabsorptionseigenschaften verfügen. Desweiteren soll es in einer besonderen Ausführung auch Brandklass-Normen erfüllen, sodass es den feuerpolizeilichen Anforderungen genügen kann.

Diese Aufgabe wird gelöst von einem thermoaktiven Wand- und Deckenelement zum Verbauen in Räumen von Neu- und Altbauten einschliesslich Leichtbauten zu deren Temperierung, indem es einen geschlossenen Kasten einschliesst, der zur Zwischenspeicherung von Wärme als Latentwärmespeicher ein Phasenwechselmaterial enthält, sowie mindestens ein zugehöriges Heiz- und Kühlrohr zum Steuern des Wärmetausches zwischen dem Kasten und seiner Umgebung aufweist, und das sich dadurch auszeichnet, dass der Kasten zur Zwischenspeicherung von Wärme ein Phasenwechselmaterial auf Normal-Paraffin-Basis oder ein Salzhydrat enthält, wobei der Kasten zur Steigerung der Wärmeleitfähigkeit im Bereich des Phasenwechselmaterials in seinem Innern entweder mit Wärmeleitrippen ausgerüstet ist und/oder dem Phasenwechselmaterial zur Steigerung der Wärmeleitfähigkeit Graphit zugesetzt ist.

Vorteilhafte Ausführungen dieses thermoaktiven Wand- und Deckenelementes gehen aus den abhängigen Patentansprüchen hervor. Anhand der Zeichnungen werden verschiedene Varianten dieses thermoaktiven Wand- und De-ckenelementes vorgestellt und in der nachfolgenden Beschreibung werden sie im einzelnen erläutert und ihre Funktion wird erklärt, wobei die vierte Variante die erfindungsgemäße Ausführungsform betrifft.

Es zeigt:
- Figur 1:: Eine erste Variante eines thermoaktiven Wand- und Deckenelementes in einem Querschnitt dargestellt, bei dem das Heiz- und Kühlrohr aus- serhalb des Kastens in einer Lamellenkonstruktion verläuft, welche mit Schallabsorptionsmaterial gefüllt ist und das Deckenblech trägt, wobei diese Lamellenkonstruktion in einem unterbrechbaren Wärmeschluss mit dem Kasten steht;
- Figur 2:: Eine zweite Variante eines thermoaktiven Wand- und Deckenelementes in einem Querschnitt dargestellt, bei dem das Heiz- und Kühlrohr aus- serhalb des Kastens in einer Lamellenkonstruktion verläuft, welche mit Schallabsorptionsmaterial gefüllt ist und das Deckenblech trägt, wobei diese Lamellenkonstruktion in einem unterbrechbaren Wärmeschluss mit dem Kasten steht;
- Figur 3:: Eine dritte Variante eines thermoaktiven Wand- und Deckenelementes in einem Querschnitt dargestellt, bei dem das Heiz- und Kühlrohr in das Kastenmaterial integriert ist und im Innern des Kastens verläuft, und das raumseitig mit Schallabsorptionsmaterial ausgerüstet ist;
- Figur 4:: Eine vierte und erfindungsgemäße Variante eines thermoaktiven Wand- und Deckenelements in einem Querschnitt dargestellt, das raumseitig mit Schallabsorptionsmaterial ausgerüstet ist und bei dem das Heiz- und Kühlrohr wärmeschlüssig in einem Kännel in der Unterseite des Kastens längs dessen Außenseite verläuft und mit dem raumseitigen Deckenblech wärmeschlüssig verbunden ist.
- Figur 5:: Eine fünfte Variante eines thermoaktiven Wand- und Deckenelementes in einem Querschnitt dargestellt, bei dem das Heiz- und Kühlrohr im Kastenmaterial integriert ist und das Schalldämmmaterial oberhalb des Kastens angeordnet ist;
- Figur 6:: Eine sechste Variante eines thermoaktiven Wand- und Deckenelemen- tes in perspektivischer Ansicht dargestellt, bei dem die Heiz- und Kühl- rohre von einer Kapillarrohrmatte gebildet werden, die in das Kasten- material integriert ist;
- Figur 7:: Eine erste Variante einer Aufhängevorrichtung für solche Wand- und Deckenelemente;
- Figur 8:: Eine zweite Variante einer Aufhängevorrichtung für solche Wand- und Deckenelemente;
- Figur 9:: Eine siebte Variante eines besonders feuersicheren thermoaktiven Wand- und Deckenelementes in perspektivischer Ansicht dargestellt, bei dem die Heiz- und Kühlrohre von einer Kapillarrohrmatte gebildet werden, mit mikrogekapseltem, in Gips dispergiertem PCM.

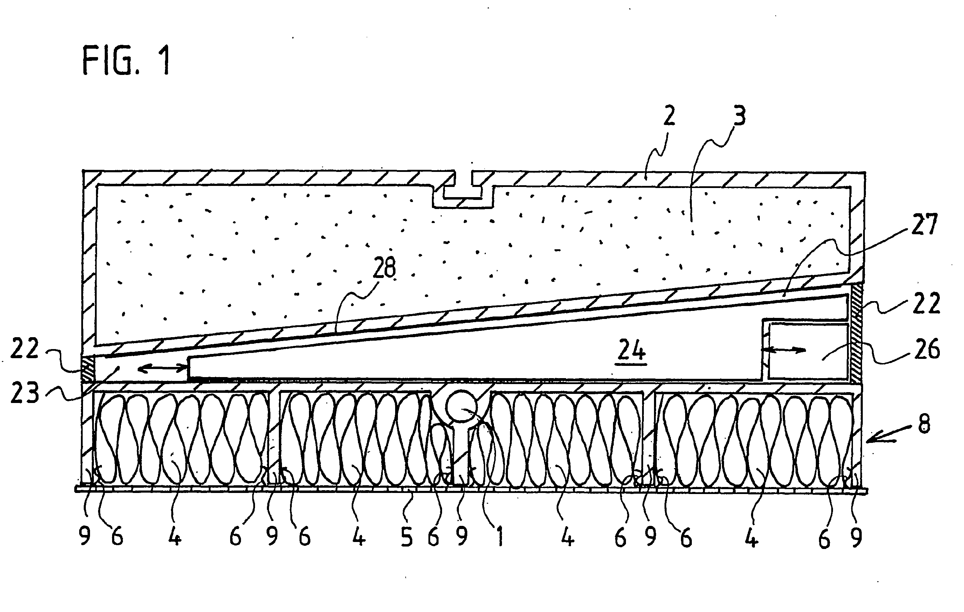

Zunächst wird das thermoaktive Wand- und Deckenelement anhand von Figur 1 beschrieben. Es besteht im wesentlichen aus einem geschlossenen Kasten 2 aus wärmeleitfähigem Material, der mit einem Phasenwechselmaterial 3 gefüllt ist, sowie einer Lamellenkonstruktion 8 mit einem Heiz- und Kühlrohr 1 und einem Sichtdeckenelement 5, wobei alle diese Elemente in einer wärmetechnischen Wechselwirkung zueinander stehen, wie das noch erklärt wird. Im gezeigten Beispiel handelt es sich beim Kasten 2 um ein Blechprofil mit im Querschnitt gesehen schiefwinklig zur Oberseite verlaufender Unterseite, wobei dieses Blechprofil einen Hohlraum einschliesst, indem es hinten und vorne mit einem daraufpassenden Deckel flüssigkeitsdicht verschlossen ist. Dieser Blechkasten 2 wird aus Gewichtsgründen vorteilhaft aus Aluminiumblech hergestellt, wenngleich auch Stahlblech, Chromstahl oder andere Buntmetalle als Herstellmaterial in Frage kommen. Der Kasten 2 kann auch aus einem geeigneten Kunststoff gefertigt sein, der bei geringer Wandstärke ebenfalls gut wärmeleitend ist. Das Phasenwechselmaterial 3 wird entweder in reiner Form oder in einem Trägermaterial eingelagert verwendet. Der Blechkasten 2 kann einen gesonderten Zu- und Ablaufanschluss enthalten, damit das Phasenwechselmaterial 3 nachträglich in flüssiger Form eingefüllt oder auch wieder entfernt werden kann, damit ein allfälliger späterer Rückbau einfacher vonstatten geht. Unterhalb des Kastens 2 ist hier eine Lamellenkonstruktion 8 angebaut, welche eine Anzahl rippenförmige Lamellen 9 bildet, zwischen denen ein schallabsorbierendes Material 4 untergebracht ist. Diese Lamellenkonstruktion 8 ist rundum über Seitenwände 22 am Kasten 2 befestigt, welche aus gut wärmeisolierendem Material gefertigt sind und deshalb als thermische Trennwände 22 wirken. Zwischen dem Kasten 2 und der Lamellenkonstruktion 8 ist damit ein Hohlraum 23 gebildet, innerhalb desselben ein thermisch gut leitender, hier im Querschnitt gesehen keilförmiger Wärmekontaktkörper 24 eingebaut ist. Dieser liegt hier verschiebbar auf der Oberseite der Lamellenkonstruktion 8 auf und steht in einem Wärmeschluss mit derselben. Dieser keilförmige Wärmekontaktkörpers 24 ist zum Beispiel ein Aluminium-Vollmaterialkörper oder er besteht einem Aluminiumblech-Hohlkörper, der mit einer gut wärmeleitenden Metallwolle oder einer Metallschaumfüllung gefüllt ist. Auf der höheren Seite seiner Keilform sind Antriebsmittel 26 angeordnet, mittels derer der Wärmekontaktkörper 24 im Hohlraum 23 horizontal hin und her verschiebbar ist. Wenn er im Bild ganz nach links verschoben wird, so erfolgt ein Wärmeschluss seiner Oberseite mit der Unterseite des Kastens 2, die mit einer Kontaktschicht 28 versehen ist, und somit kann Wärme zwischen dem Kasten 2 und der Lamellenkonstruktion 8 und dem daran befestigten Sichtdeckenelement 5, welches zum Beispiel ein perforiertes Blech sein kann, hin und her fliessen, je nach dem gerade herrschenden Temperaturgefälle. Ist der Wärmekontaktkörper 24 hingegen ganz nach rechts verschoben wie im Bild gezeigt, so entsteht über ihm ein Luftspalt 27, der ihn thermisch vom Kasten 2 trennt. Die thermische Trennung kann unterstützt werden durch eine low-ε-Beschichtung der Kastenunterseite und der Oberseite des Wärmekontaktkörpers 24 zur Verminderung der Wärmeabstrahlung im langwelligen Bereich.

Die Antriebsmittel 26 bestehen vorteilhaft aus einem oder mehreren elektrochemischen Aktoren. Bei einem solchen elektrochemischen Aktor, auch unter der Abkürzung ECA bekannt, handelt es sich um die Kombination eines Ausdehnungselementes als pneumatische Komponente einerseits und eines Akkumulators als elektrochemische Komponente für eine kontrollierte Gaserzeugung andrerseits. Der Akkumulator kann mit Nickel-Wasserstoffzellen durch Zu- und Abfuhr von Gleichstrom auf geringer Spannung von ca. 2 Volt reversibel Wasserstoff erzeugen und verbrauchen, der dann ein Ausdehnungselement in Form eines Metallbalges speist. Solche ECA's eignen sich hervorragend als Stellelemente und namentlich als Positionierer, denn sie zeichnen sich durch gute Regeleigenschaften aus und vermögen mit geringem Bauvolumen grosse Kräfte mit geringem Energieverbrauch aufzubauen, und obendrein arbeiten sie völlig geräuschlos. Im Vergleich zu motorischen Antrieben benötigen sie keine Peripherie, weil keine Notwendigkeit besteht, eine Rotationsbewegung in eine translatorische Bewegung umzuwandeln. Halte-Zustände lassen sich in jeder Position des Stellweges nutzen. Die Zufuhr von geringen Ladungen führt zu sehr kleinen Stellbewegungen, welche von einem Wegsensor erfasst werden können. Die Stellgeschwindigkeiten ohne Last betragen ca. 0.1 mm/s bis 1mmls und die typischen Innendrucke von ECA's liegen im Bereich von 4bar bis zu 50br. Als weitere Antriebsvariante können sich elektroaktive Polymere eignen, die bei Anlegung eines elektrischen Feldes eine Längenausdehnung vollziehen, oder auch elektroreologische Flüssigkeiten bzw. hydraulische oder magnetische Kraftzylinder können sich als Antriebsmittel eignen.

Im Innern der Lamellenkonstruktion 8, die vorteilhaft aus einem im Strangengussverfahren hergestellten Profil besteht, verläuft mindestens ein Heiz- und Kühlrohr 1. Dieses Heiz- und Kühlrohr 1 dient zum Bewirtschaften des ganzen thermoaktiven Wand- oder Deckenelementes. Die von den Heiz- und Kühlrohren 1 gebildeten Strömungskanäle mehrerer einzelner Wand- und Deckenelemente werden bei der Montage miteinander verbunden, etwa durch Einlöten oder mittels kuppelbarer Rohrbögen oder flexibler Schlauchverbindungen. Ein einzelnes solches Wand- und Deckenelement wird bei einer bestimmten Profilbreite vorteilhaft in bestimmten Systemlängen hergestellt, zum Beispiel in 1 m, 2m und 3m Länge. Die Profilbreite wird durch das maximale Montagegewicht begrenzt. Die Längen werden so bestimmt, dass der Umschlag der Elemente noch handlich bleibt und sie von zwei Monteuren auf der Baustelle leicht herumgetragen und installiert werden können.

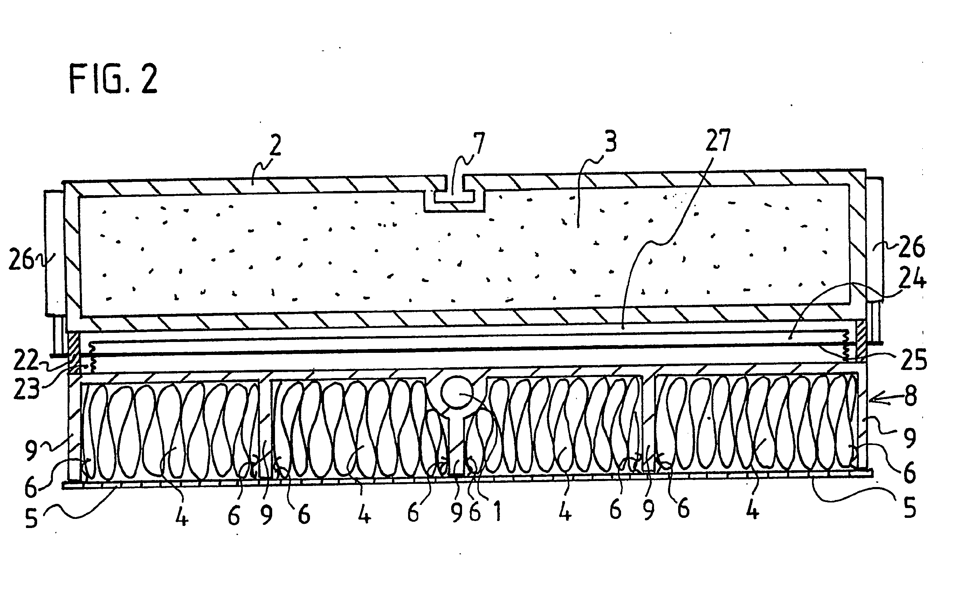

In Figur 2 ist eine zweite Variante eines thermoaktiven Decken- und Wandelementes gezeigt, das über weite Teile identisch wie jenes aus Figur 1 aufgebaut ist, nämlich ebenfalls mit einem Kasten 2, der mit einem Phasenwechselmaterial 3 befüllt ist, sowie mit einer vom Kasten 2 thermisch getrennten Lamellenkonstruktion 8, die über rundum verlaufende Seitenwände 22 aus gut wärmeisolierendem Material mit dem Kasten 2 verbunden ist. Die Lamellenkonstruktion 8 ist mit einem Sichtdeckenelement 5 verschlossen und enthält zwischen ihren Lamellen 9 ein Schallabsorptionsmaterial 4. Im Unterschied zur Konstruktion nach Figur 1 ist hier die Steuerung des Wärmeflusses zwischen dem Kasten 2 und der Lamellenkonstruktion 8 anders gelöst. Im Hohlraum 23 zwischen dem Kasten 2 und der Lamellenkonstruktion 8 ist hierzu ein thermisch gut leitender, elastisch komprimierbarer Wärmekontaktkörper 24 eingebaut. Dieser besteht zum Beispiel aus einem geeigneten wärmeleitfähigen Polymer. Innerhalb dieses Körpers 24 oder auf seiner Oberseite verläuft ein Bewegungsblech 25, welches parallel nach oben oder unten bewegbar ist und dabei den Wärmekontaktkörper 24 mitnimmt. Wenn das Bewegungsblech 25, das im hier gezeigten Beispiel innerhalb des Wärmekontaktkörpers 24 verläuft, in seine oberste Stellung gebracht wird, so schliesst der Wärmekontaktkörper 24 an die untere Aussenseite des Kastens 2 an und es kommt zu einem Wärmeschluss mit demselben. Wenn das Bewegungsblech 25 andrerseits in seine unterste Position gebracht wird, so wird der Wärmekontaktkörper 24 komprimiert und es entsteht ein Luftspalt 27 zwischen seiner Oberseite und der Unterseite des Kastens 2. Dieser Luftspalt 27 wirkt thermisch isolierend, sodass die Lamellenkonstruktion 8 vom Kasten 2 thermisch weitgehend getrennt ist. Das Komprimieren und Expandieren des Wärmekontaktkörpers 24 ist im gezeigten Beispiel mittels dieses Bewegungsbleches 25 gelöst, welches seinerseits von thermoelektrischen Antriebsmitteln 26, Elektromotoren, hydraulischen oder magnetischen Kraftzylindern oder aber elektrochemischen Aktoren ECA bzw. elektroaktiven Polymeren (EAP) bewerkstelligt wird, die wie hier gezeigt an der Aussenseite des Kastens 2 befestigt sind.

Die bedarfsweise thermische Trennung des Kastens 2 von der Lamellenkonstruktion 8 mit dem an ihrer Unterseite befestigten Sichtdeckenelementes 5 ist selbstverständlich auch noch mit weiteren Konstruktionsvarianten realisierbar. Zum Beispiel können eine Anzahl gut wärmeleitende Materialbrücken im Hohlraum 23 zwischen dem Kasten 2 und der Lamellenkonstruktion 8 vorgesehen werden, die dann wie elektrische Schalter unterbrochen werden können, wobei dieses Unterbrechen und Schliessen elektrisch erfolgen kann. In einer weiteren Variante können als Antriebsmittel zur Deformation des elastisch komprimierbaren Wärmekontaktkörpers Elektro-Aktive-Polymere EAP eingesetzt werden, die im Innern des Wärmekontaktkörpers 24 angeordnet werden. Sie werden elektrisch betätigt und dehnen ich unter Stormzufuhr aus und kontraktieren wieder bei Stromabfuhr, sodass sich bedarfsweise ein Luftspalt 27 zwischen dem Wärmekontaktkörper 24 und dem Kasten 2 erzeugen lässt.

Im Innern des Kastens 2 befindet sich wie schon erwähnt ein Phasenwechselmaterial 3, welches einen wesentlichen Bestandteil dieser Decken- und Wandelemente bildet. Solche Materialien weisen eine besonders hohe Schmelzenthalpie auf und sind als PCM bekannt, was eine Abkürzung für das englische Phase Change Material ist. Sie enthalten vorzugsweise Paraffine. Paraffin ist eine Sammelbezeichnung für gesättigte Kohlenwasserstoffgemische, die hauptsächlich aus Erdöl gewonnen werden, ein Nebenprodukt der Schmierölherstellung sind und auch als Wachse bezeichnet werden. Es sind organische Stoffe, die nach der Raffination geruchlos, geschmacklos und ungiftig sind. Paraffine sind Stoffe, die durch günstige chemische und physikalische Eigenschaften gut für thermische Anwendungen geeignet sind. Die technische Handhabung ist unproblematisch. Man unterscheidet zwischen Normal-Paraffinen und Iso-Paraffinen. Normalparaffine bestehen aus einfachen, langgestreckten Molekülketten. Isoparaffine hingegen haben Moleküle mit einer langen Grundkette und davon verzweigenden Ästen. Für wärmetechnische Anwendungen wie hier vorliegend kommen Normal-Paraffine zum Einsatz. Die chemische Summenformel für Paraffin lautet: CₙH₂ₙ₊₂. Für Paraffine mit einer Schmelztemperatur zwischen 20°C bis 90°C liegt die Zahl n zwischen 17 und 50. Mit steigender Molekülkettenlänge bzw. steigender Molmasse nimmt die Schmelztemperatur des Materials zu. Je nach gewünschter Anwendung sind die PCM auf gewünschte Schmelztemperaturen konditionierbar. Das hier zum Einsatz kommende Phasenwechselmaterial auf Paraffin-Basis weist neben einer hohen spezifischen Wärmekapazität eine Schmelztemperatur von 20°C bis 24°C auf, was den üblichen Raum-Oberflächentemperaturen entspricht: Idealerweise sollte das Phasenwechselmaterial bei einer Schmelztemperatur von ca. 22.5°C eine spezifische Wärmekapazität von mindestens 35 kJ/(kg K) aufweisen. Die spezifische Wärmekapazität bei 21 °C resp. 24°C soll mindestens 55% des Maximalwertes der gesamten PCM-Füllung betragen, bei einer Stoffdichte von 900 kg/m³ (PCM-Graphit Gemisch). Neben der sensiblen, also fühlbaren Wärme, die von solchem Material 3 freigesetzt wird, wird besonders auch die latente Wärme, die während der Aufschmelzphase gespeichert wurde, während der Erstarrungsphase wieder freigesetzt. Sowohl das Verflüssigen wie auch das Erstarren erfolgt in einem engen Temperaturbereich, zum Beispiel innerhalb von 4-5K. Wenn andere Raumtemperaturen gehalten werden sollen, die stark von den üblichen abweichen, so kann ein geeignetes Phasenwechselmaterial mit entsprechenden Charakteristika ausgewählt werden. Der besondere Vorteil eines PCMs liegt in der Nutzung der latenten Wärme während des Phasenwechsels. Auch Salzhydrate wirken als Phasenwechselmaterial, so etwa z.B. Natriumacetat-Trihydrat oder Natriumsulfat (Glaubersalz).

Um die Vorteile eines PCM effizient zu nutzen, sollte eine hohe Schmelzenthalpie der Elemente bei einer gleichzeitig geringen Schmelzbreite sichergestellt werden. Die spezifische Wärmekapazität von Wärmeparaffinen liegt im festen wie auch im flüssigen Zustand bei etwa 2,1 kJ/(kg·K). Zusammen mit der Schmelzenthalpie von 180 bis 230 kJ/kg von reinem Paraffin und jener von 140 bis 160 kJ/kg bei einem Graphit-Paraffin-Composit ergeben sich sehr gute Wärmespeichereigenschaften. Normalerweise ist für die Be- und Entladung eines Latentwärmespeichers eine hohe Wärmeleitfähigkeit erforderlich. Wie nahezu alle organischen Stoffe haben Wärmeparaffine aber eine relativ geringe Wärmeleitfähigkeit von nur ca. 0,18 W/(m·K). Dieser Nachteil wird dadurch wettgemacht, dass dem PCM Graphit beigemengt wird. Diese Massnahme erhöht die Wärmeleitfähigkeit wesentlich. Weisen PCM ansonsten eine etwa 10 mal schlechtere Wärmeleitfähigkeit als Beton auf, so ist mit einem Graphitzusatz von 100 bis 150 kg pro m³ PCM die Wärmeleitfähigkeit ca. 3 mal so gut wie jene von Beton. Um die Feuerresistenz der Elemente zu erhöhen und den Austritt von Paraffin zu vermeiden, kann das Phasenwechselmaterial in gekapselter Form verwendet werden, das heisst in geeigneten Kapseln, deren Wandstärke und Volumen den Erfordernissen angepasst wird. Ein Spezialfall einer solchen Verkapselung ist die Mikroverkapselung. Hierzu werden die verwendeten Paraffine in sogenannten Mikrokapseln eingeschlossen. Bei diesen handelt es sich um Kunststoffkapseln mit Durchmessern zwischen 5 x 10⁻⁶m und 2 x 10⁻⁵m. Das geschmolzene Paraffin wird unter Rühren in Wasser zunächst fein verteilt. In Abhängigkeit von der Rührgeschwindigkeit und anderer Parameter bilden sich dabei winzige Paraffintropfen. Um jeden einzelnen dieser Tropfen wird in einer sogenannten in-situ-Synthese aus Kunststoffvorprodukten die feste, sehr dünne Wand der Mikrokapseln erzeugt. Das mikroverkapselte Paraffin ist dann wie ein Pulver in unterschiedlichen, handelsüblichen Baustoffen einsetzbar, zum Beispiel in Innenputzen und Spachtelmassen. Für das Einbringen in ein thermoaktives Wand- oder Deckenelement werden die mit Paraffin gefüllten Mikrokapseln in eine Gipsmasse eingerührt und darin fein dispergiert, sodass sie etwa 30% bis 50% des Massenanteils der gesamten Endmasse ausmachen. Diese Masse mit einer maximalen Wärmekapazität von um die 10 kJ/(kg K) wird dann in einem solchen Wand- oder Deckenelement als das effektiv thermoaktive Element eingesetzt. Die Verkapselung des PCM und Dispergierung in einer aushärtenden Masse stellt sicher, dass das Paraffin nicht austreten kann. Durch die geringe Grösse der Kapseln ist die Gesamtoberfläche des PCM's oder Paraffins sehr gross. Die Mikroverkapselung bewirkt daher einen optimalen Wärmeaustausch zwischen dem PCM und dem Baustoff.

Zur Unterstützung eines zuverlässigen Wärmeaustausches werden die Wand- und Deckenelemente so gestaltet, dass im Verhältnis zur enthaltenen PCM-Masse grosse Oberflächen geschaffen werden. Das wird mit einem relativ niedrigen, brettartigen Kasten 2 erzielt. Ausserdem können auch Wärmeleitrippen im Innern des Kastens 2 angeordnet werden, sodass insgesamt für den Raum, der das Phasenwechselmaterial 3 enthält, eine bessere Wärmeleitfähigkeit resultiert. In diesem geschlossenen Kasten 2 muss immer ein Ausdehnungsvolumen für ungebundenes PCM vorgesehen werden, um Überdrücke zu vermeiden. Die Dichte von flüssigen Wärmeparaffinen liegt je nach Schmelztemperatur zwischen 750 und 850 kg/m³. Feste Paraffine haben jedoch eine Dichte von 800 bis 900 kg/m³. Hieraus resultiert eine maximale Volumenausdehnung von 10% beim Phasenwechsel von fest zu flüssig. Von Unterkühlung eines Phasenwechselmaterials spricht man, wenn seine Erstarrungstemperatur unterhalb der Schmelztemperatur liegt. Dabei ist jedoch eine Unterkühlung - wenigstens im Vergleich zu anderen Latentwärmespeichermaterialien - bei Normal-Parrafin-PCM praktisch nicht existent. Ein PCM kann im Laufe seines "Lebens" oder Einsatzes sehr viele Aufwärm- und Abkühlzyklen durchlaufen. Hierzu bieten Wärmeparaffine im Gegensatz zu vielen anderen PCMs eine hohe Alterungsunempflindlichkeit und sie sind zyklenstabil, da keine chemischen Reaktionen während des Speicherbetriebes im Speichermaterial bzw. gegenüber Wärmetransportmitteln und Anlagenwerkstoffen auftreten. Wärmeparaffine sind nämlich gegenüber fast allen Materialien inert. Schon in der Namensgebung der Paraffine kommt dies zum Ausdruck: "parum affinis" - das heisst, sie zeigen praktisch keine chemische Reaktion. Das Aufschmelzen und Erstarren der Paraffine ist vielmehr ein rein physikalischer Vorgang. Aus diesem Grund bleibt die Wärmespeicherkapazität über die gesamte Lebensdauer auf konstant hohem Niveau. Wärmeparaffine sind je nach Schmelztemperatur bis zu 250 °C thermisch stabil. Auch bei höheren Betriebstemperaturen siedet Wärmeparaffin nicht, d. h. es entstehen keine hohen Dampfdrucke. Im flüssigen Zustand ist die Viskosität ähnlich hoch wie die von Wasser. Paraffin bzw. Wachs ist brennbar, jedoch liegt die Zündtemperatur deutlich über 250 °C. Wärmeparrafine sind ökologisch völlig unbedenkliche Stoffe. Sie sind weder wassergefährdend noch toxisch noch irgendwie gesundheitsschädlich, dafür aber rezyklierbar und biologisch abbaubar.

Betrachten wir nun den Ausgangszustand eines in einem Raum montierten Wand- und Deckenelementes am Morgen eines heissen Sommertages. Das Phasenwechselmaterial im Kasten 2 ist erstarrt und das ganze thermoaktive Element auf einer Temperatur von zum Beispiel 21°C. Der Wärmeschluss zwischen dem Sichtdeckenelement 5, das heisst etwa dem Sichtdeckenblech und dem Kasten 2 ist durch den Wärmekontaktkörper 24 sichergestellt. Steigt nun die Raumtemperatur nur wenig an, so beginnt Wärme durch das Sichtdeckenelement 5 und den Wärmekontaktkörper 24 in den Kasten 2 zu fliessen und dort das Phasenwechselmaterial 3 nach und nach zu verflüssigen. Dem Raum wird somit Wärme entzogen, ohne dass hierfür eine energieaufwändige Kühlleistung nötig wäre. Die aufgenommene Wärme wird einfach im Phasenwechselmaterial 3 des Kastens 2 eingelagert. In der Nacht kann die in dieser Weise eingelagerte Wärme an eine natürliche Wärmesenke abgeführt werden, wodurch das Phasenwechselmaterial 3 wiederum erstarrt und zur erneuten Wärmeaufnahme während des kommenden Tages bereit ist. Sieht man voraus, dass demnächst eine markante Kaltfront eintreffen wird, so wird auf das Abführen der Wärme verzichtet. Das Gleiche gilt für den Fall, dass während der Nacht die Temperatur im Raum tief absinkt, sodass sie am folgenden Morgen zu tief für ein angenehmes Arbeiten wäre. In diesem Fall wird die Wärme aus dem Kasten 2 in umgekehrter Richtung über das Sichtdeckenelement 5 wieder an den Raum abgegeben. In dieser Weise lässt sich die Raumtemperatur tagsüber ohne Energieaufwand in engen Grenzen einhalten. Zur Unterstützung des Wärmetausches mit dem Raum oder zum Auslösen eines Wärmeflusses zwischen dem Raum und dem Phasenwechselmaterial 3 kann zusätzlich Wärme mittels des Heiz- und Kühlrohres 1 zu- oder abgeführt werden, ganz nach Bedarf. Genügt etwa die in der Nacht absinkende Umgebungstemperatur nicht, um das verflüssigte Phasenwechselmaterial bis am folgenden Morgen komplett zur Erstarrung zu bringen, so kann mit Kühlwasser aus einer natürlichen Wärmesenke nachgeholfen werden, welches zu diesem Zweck durch das Heiz- und Kühlrohr 1 zirkuliert. Ganz unabhängig von der Funktion des Phasenwechselmaterials kann selbstverständlich mit dem Heiz- und Kühlrohr 1 dem Raum bedarfsweise Wärme von einer Wärmequelle zu- oder Wärme von ihm an eine Wärmesenke abgeführt werden. Für eine solche Direktkühlung und -heizung wird die Lamellenkonstruktion 8 vom Kasten 2 thermisch getrennt. Der Kasten 2 mit dem Phasenwechselmaterial 3 wirkt aber soweit möglich als Wärmespeicher und hilft, die Wärme phasenverschoben zum Temperaturverlauf über 24 Stunden abzugeben oder aufzunehmen.

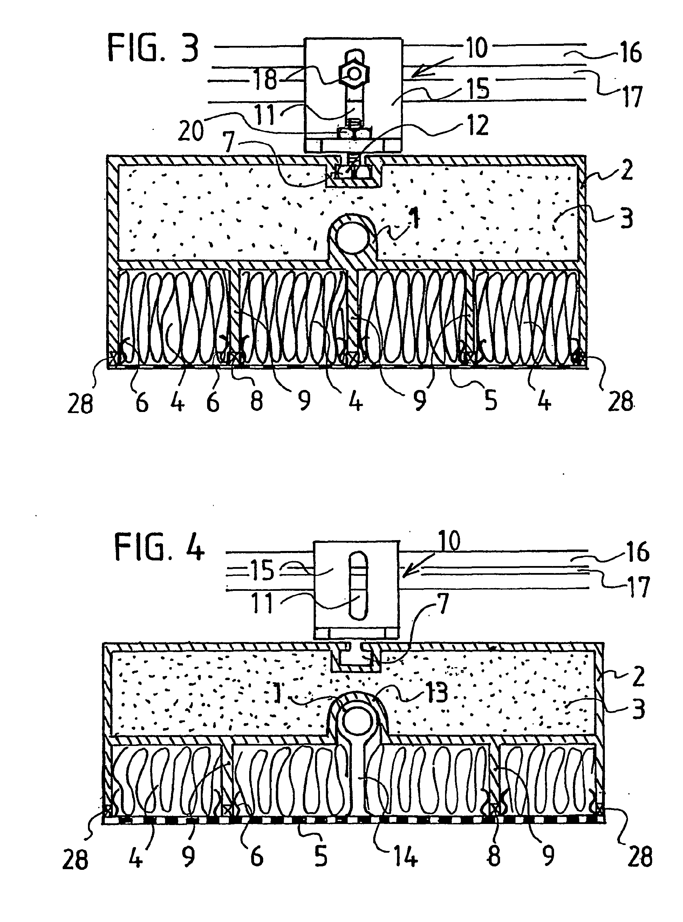

Die Figur 3 zeigt eine dritte Variante des thermoaktiven Wand- und Deckenelementes. Es ist hier in einem Querschnitt dargestellt. Im Innern des Kastens 2 verläuft längs dessen Unterseite aus dem Kastenmaterial herausgebildet das Heiz- und Kühlrohr 1 als Strömungskanal in Längsrichtung des Kastens 2 bzw. des Profiles. Dieses Heiz- und Kühlrohr 1 ist daher stationär mit dem Kasten 2 verbunden und direkt zu ihm gehörig. Es besteht daher aus demselben Material wie der Kasten und kann nötigenfalls ein Einsatzrohr aus Kupfer aufweisen. Auf der Unterseite des Kastens 2 sind hier in Längsrichtung des Kastens 2 verlaufende Lamellen 9 angeordnet, zwischen denen ein Schallabsorptionsmaterial 4 zur Verbesserung der Raumakustik eingelegt ist. Die ganze hier gezeigte Konstruktion ist von unten mittels eines perforierten Deckenbleches als Sichtdeckenelement 5 verschlossen. Dieses Sichtdeckenelement 5 wird mittels eines Klemm-Mechanismus aus Federstahl-Klammern 6 auf die unteren Randabschnitte der Lamellen 9 aufgesteckt. An den unteren Rändern der Lamellen 9 ist zudem eine Kontaktschicht 28 aufgebracht, welche zu einem verbesserten Wärmeschluss der Verbindung beiträgt, weil ja die Wärme massgeblich über das gelochte Deckenblech 5 vom Raum aufgenommen und im Falle eines Heizbedarfs wieder an diesen abgegeben wird. Es kann sich bei dieser Kontaktschicht 28 um einen wärmeleitfähigen Schaumstoff handeln, der komprimierbar ist. Der Wärmedurchgang ist wegen der geringen Dicke des Materials auch bei nur mässigen Wärmeleiteigenschaften dieses Materials hinreichend gut. Ein grundsätzlich guter Wärmeübergang vom Deckenblech bzw. vom Sichtdeckenelement 5 auf die Lamellen 9 auf der Kastenunterseite ist entscheidend. In einer Variante kann an die Stelle des Schallabsportionsmaterials 4 Stahlwolle treten, welche ebenfalls eine, wenn auch geringere schallabsorbierende Wirkung hat, die aber ein guter Wärmeleiter ist. In diesem Fall erübrigen sich die Lamellen 9 und das Sichtdeckenelement 5 wird bloss an den Kastenrändern befestigt. Auf der Oberseite des Kastens 2 ist eine im Querschnitt T-förmige Nut 7 angeordnet, mit welcher der Kasten 2 durch Winkelstücke 15 an eine zugehörige Tragkonstruktion in Form eines Vierkantrohres 16 mit Längsschlitz 17 befestigt werden kann. Die Winkelstücke 15 sind mit Schrauben an der Nut 7 befestigt, wobei die Schraubenköpfe 12 verdrehsicher in der Nut 7 sitzen. Die seitlichen Langlöcher 11 an den Winkelstücken erlauben es, die Höhe bzw. den Abstand des Kastens 2 zur Decke anzupassen und Unregelmässigkeiten auszugleichen. Die Winkelstücke 15 werden mittels der Schrauben 18 an ein bauseits an die Decke vormontiertes Vierkantrohr 16 mit mittigem Längsschlitz 17 montiert, wie das in der Figur 3 gezeigt wird. Ein Deckenelement wird in diesem Fall quer zu seiner Längsrichtung an mindestens zwei parallel angeordneten derartigen Vierkantrohren 16 befestigt.

In Figur 4 ist eine vierte Variante eines thermoaktiven Wand- und Deckenelementes in einem Querschnitt dargestellt, das ebenfalls raumseitig mit Schallabsorptionsmaterial 4 ausgerüstet ist. Das Heiz- und Kühlrohr 1 ist hier nicht direkt aus dem Material des Kastens 2 ausgeformt, sondern verläuft wärmeschlüssig innerhalb eines Kännels 13 in der Unterseite dieses Kastens 2, der sich längs des Kastens 2 erstreckt. Der Kasten 2 weist auf seiner Unterseite ebenfalls nach unten ragende Lamellen 9 auf, zwischen denen ein Schalldämmungs-Material 4 eingelegt ist. In einer Variante kann an die Stelle des Schallabsportionsmaterials 4 wiederum Stahlwolle treten. In diesem Fall erübrigen sich die Lamellen 9 und das perforierte Deckenblech als Sichtdeckenelement 5 wird bloss an den Kastenrändern befestigt. Das eigentliche Heiz- und Kühlrohr 1 ist über einen Trägersteg 14 am perforierten Deckenblech wärmeschlüssig befestigt. Es kann sich dabei um ein Stahl- oder Aluminiumrohr 1 handeln, das bedarfsweise auch noch mit einem Einsatzrohr aus Kupfer augestattet sein kann. Der untere Rand des Trägerstegs 14 ist am perforierten Deckenblech bzw. Sichtdeckenelement 5 angelötet, angeklebt oder angeschweisst, womit eine Wärmebrücke zum Sichtdeckenelement 5 geschaffen wird. Das Sichtdeckenelement 5 wird mitsamt dem Heiz- und Kühlrohr 1 von unten auf den Kasten 2 gesteckt, wodurch es zu einer wärmeschlüssigen Verbindung zwischen dem Rohr 1 und dem Kännel 13 im Kasten 2 kommt. Dabei kann das Sichtdeckenelement 5 mit Federstahl-Klammem 6 versehen sein, mittels derer es einfach durch Aufklipsen an den Lamellen 9 des Kastens 2 befestigbar ist, nachdem die Rohre 1 der einzelnen Wand- und Deckenelemente durch Verlöten oder mittels kuppelbarer Rohrbögen oder flexibler Schlauchverbindungen miteinander verbunden wurden. Bei Bedarf können die Sichtdeckenelemente 5 somit leicht entfernt werden. Auf der Oberseite des Kastens 2 ist eine Nut 7 eingelassen, mit welcher das Deckenelement an einer dazu passenden Trägerkonstruktion 16 befestigt werden kann, wie schon zu Figur 3 beschrieben. Diese Variante des Wand- und Deckenelementes eignet sich auch zur Nachrüstung einer Kühldecke, die bereits ein Sichtdeckenblech sowie ein Kühlrohr aufweist, das mit dem Sichtdeckenblech wärmeschlüssig verbunden ist. In diesem Fall verändert man bloss den Überbau über dem Kühlrohr. Über jedem Kühlrohr wird ein Kasten 2 mit Phasenwechselmaterial 3 montiert. Der Kasten 2 weist auf seiner Unterseite einen Kännel auf, in welchen dann das bereits vorhandene Kühlrohr wärmeschlüssig zu liegen kommen, wobei die perforierte Sichtdecke ansonsten weiterverwendbar ist. Dieses thermoaktive Wand- und Deckenelement kann ausserdem in der gleichen Weise wie an Raumdecken auch an Wänden montiert werden.

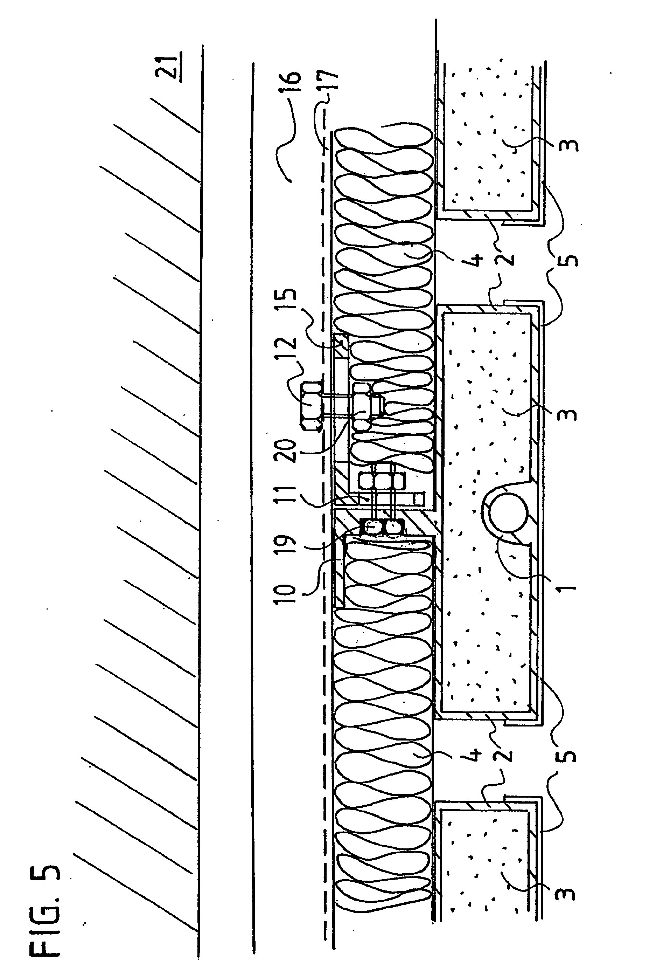

In Figur 5 ist noch eine fünfte Variante des thermoaktiven Wand- und Deckenelementes in einem Querschnitt dargestellt. Bei dieser Variante ist das Heiz- und Kühlrohr 1 im Profilmaterial integriert und als Besonderheit ist das Schallabsorptionsmaterial 4 oberhalb des Kastens 2 angeordnet. Bei dieser Ausführung entfallen die Wärmeleitlamellen zwischen der Unterseite des Kastens 2 und dem in diesem Fall nicht gelochten Deckenblech 5. Das Sichtdeckenelement 5 kann in einer Variante auch durch eine Gipsschicht oder Gipsplatte gebildet sein. Anstelle eines aus dem Kastenmaterial ausgebildeten Heiz- und Kühlrohres 1 können auch stoffschlüssig mit dem Kasten angeordnete Rohre treten. Solche Deckenelemente, bei denen das Schallabsorptionsmaterial 4 oberhalb des Kastens 2 angeordnet ist, werden so verlegt, dass zwischen den einzelnen montierten Deckenelementen jeweils ein Spalt freigelassen wird, sodass der Schall durch diese Spalten auf das oberhalb der Deckenelemente angeordnete Schallabsorptionsmaterial 4 auftrifft und von ihm absorbiert wird. Verzichtet man hingegen ganz auf eine Schallabsorptionsfähigkeit und lässt das Schallabsorptionsmaterial weg, so kann auf einen Abstand zwischen den Elementen und die Isolationsschicht verzichtet werden. Diese Variante eignet sich dann speziell für die Wandmontage.

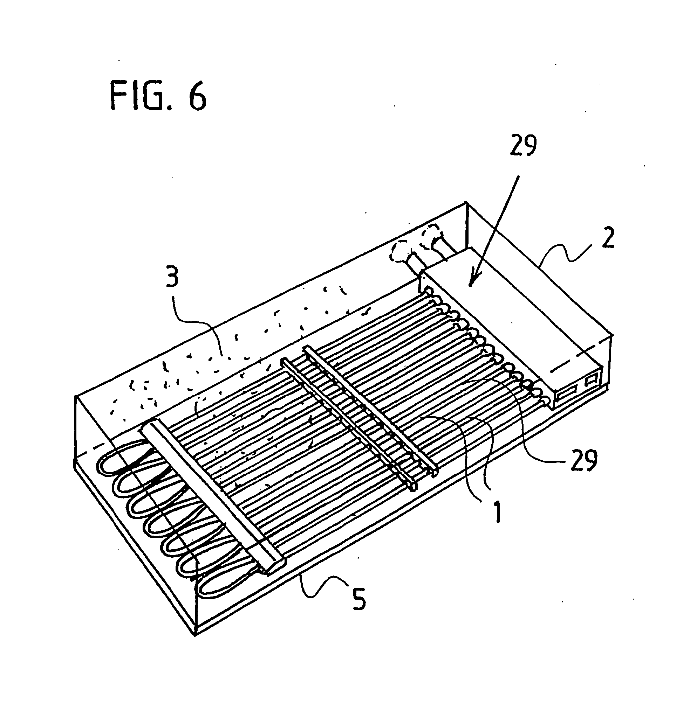

In Figur 6 ist eine Variante gezeigt, bei welcher die Heiz- und Kühlrohr 1 innerhalb des Kastens 2 verlaufen und von einer handelsüblichen Kapillarrohrmatte 29 gebildet werden. Solche Kapiallarrohrmatten können für beliebige Längen und Breiten konfektioniert werden und werden zum Beispiel in Längsrichtung in den Kasten 2 eingelegt, wonach das Phasenwechselmaterial 3 eingefüllt wird, welches dann die Rohre der Kapillarrohrmatte 29 umschliesst.

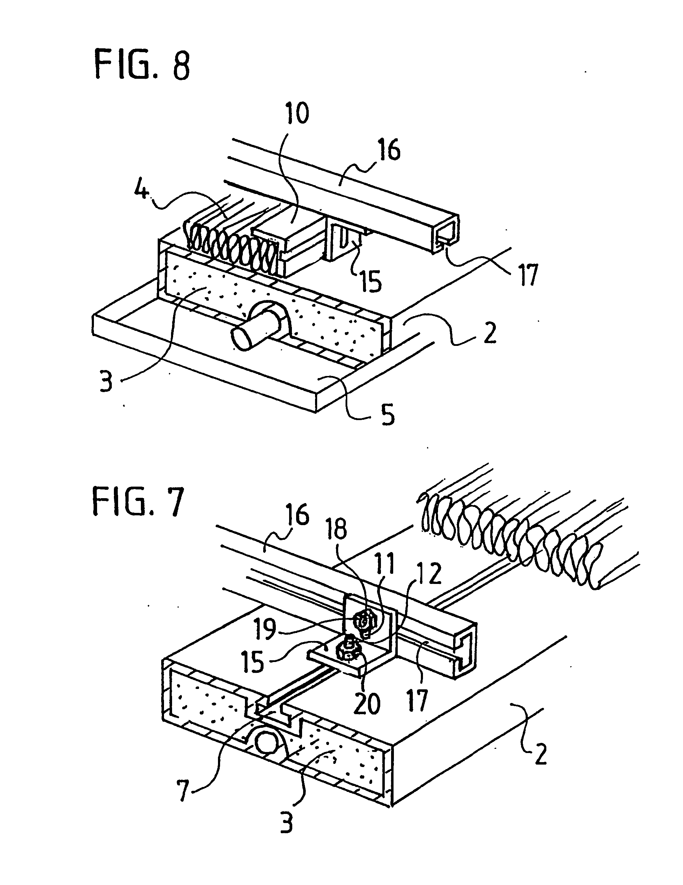

Die Wand- und Deckenelemente können wie in Figur 3 und 7 gezeigt montiert werden, wenn sie auf ihrer Oberseite eine Nut 7 mit T-förmigem Querschnitt aufweisen. In diese Nut 7 passt der sechskantige Schraubenkopf einer Schraube 12, sodass die Schraube 12 nach oben aus der Nut 7 ragt und in ihr verdrehsicher, jedoch längs der Nut 7 verschiebbar gehalten ist. Über die Schraube 12 ist der horizontale Schenkel eines Winkelstückes 15 gestülpt und mit einer zur Schraube gehörigen Mutter 20 gesichert. Der nach oben ragende Schenkel des Winkelstückes 15 weist ein vertikales Langloch 11 an, welches von einer Schraube 18 durchsetzt ist, deren sechskantiger Kopf verdrehsicher in ein Vierkantprofil 16 mit seitlichem Längsschlitz 17 einpasst, sodass er darin verdrehbar gehalten ist. Somit ist das Winkelstück 15 längs des Vierkantprofiles 16 verschiebbar und um die Länge des Langloches 11 in der Höhe verstellbar. Zum Befestigen wird bloss noch die zur Schraube 18 gehörige Mutter 19 festgezogen. Das Vierkantprofil 16 wird zuvor mit Ankerschrauben an eine auszurüstende Decke montiert. An diesem Vierkantprofil 16 kann somit das Deckenelement in zwei Richtungen verschiebbar ausgerichtet und befestigt werden.

Anstelle einer Nut 7 können die Wand- und Deckenelemente an ihrer Oberseite eine Trägerkonstruktion 10 aus einem nach oben ragenden Winkelprofil 10 aufweisen, wie das aus der Figur 5 hervorgeht und in Figur 8 perspektivisch gezeigt ist. Beidseits des Winkelprofils 10 kann das Wand- und Deckenelement mit Schallabsorptionsmaterial 4 belegt sein. An dieses Winkelprofil 10 wird ein Winkelstücke 15 angeschraubt, welches in jedem Schenkel ein vertikal verlaufendes Langloch 11 aufweist. Das Winkelprofil 10 auf der Oberseite des Kastens 2 weist eine solche Nut auf, die einen Schraubenkopf verdrehsicher aufnimmt, wobei aber die Schraube längs der Nut verschiebbar bleibt. Der horizontale Schenkel der Winkelstücke 15 wird an der Unterseite eines Vierkantrohres 16 befestigt, welches auf dieser Unterseite einen Längsschlitz 17 aufweist und zuvor an die Rohdecke montiert wurde. Der Längsschlitz 17 erlaubt es, eine Schraube mit ihrem Kopf in das Vierkantrohr 16 einzuschieben, sodass der Schraubenkopf 12 darin verdrehsicher gehalten ist, während die Schraube durch den Längsschlitz 17 nach unten ragt und längs des Vierkantrohres 16 verschiebbar ist.

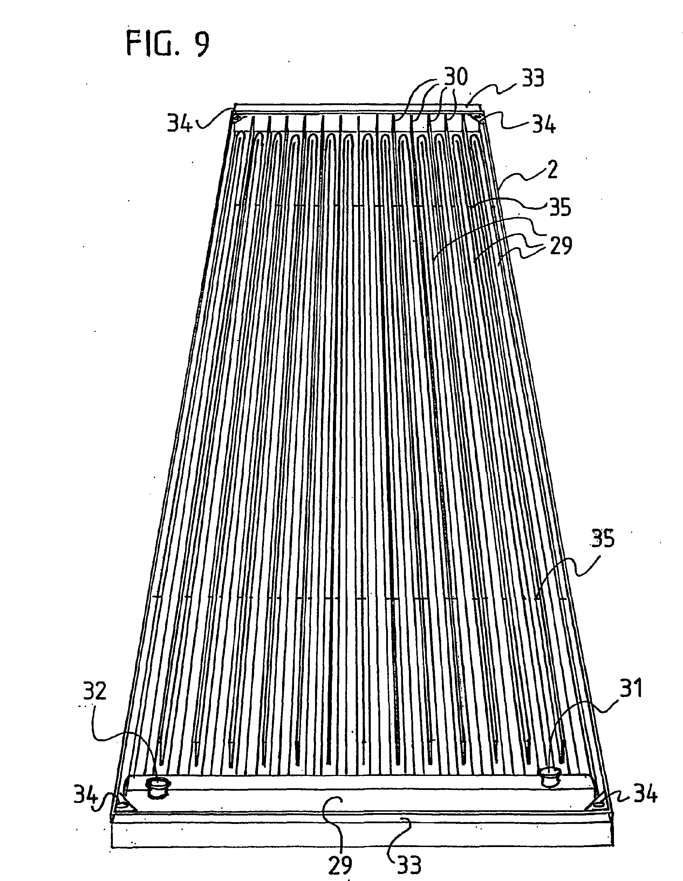

Eine besondere Ausführung des thermoaktiven Wand- und Deckenelementes ist in der Figur 9 gezeigt. Die Randbereiche des Kastens 2 sind hochgezogen und an den Ecken dicht verschlossen. Man sieht hier den Kasten 2 ohne Deckel und die darin in Längsrichtung verlaufenden Wärmeleitrippen 30, die längs ihrer Unterseite wärmeleitend mit der Bodenplatte des Kastens 2 verbunden sind. Es kann sich dabei um Aluminium-Winkelprofile handeln, die durch Querstreben 35 einen Rost bilden. Die unteren, waagrecht verlaufenden Schenkel der Profile sind dann mittels eines Spezialklebebandes wärmeleitend mit der Grundplatte des Kastens 2 verklebt. Diese Wärmeleitrippen 30 sind um ca. 30mm voneinander beabstandet und zwischen ihnen verlaufen die Leitungsschlaufen 29 der Kapillarmatte 29. Zwischen je zwei Wärmeleitrippen 30 verläuft mindestens eine einzelne Leitungsschlaufe 29. Hierzu kann die Kapillarmatte 29 bloss in den oben noch offenen Kasten 2 eingelegt werden, sodass sich das Wand- und Deckenelement im hier gezeigten Zustand zeigt. Man erkennt an der Kapillarmatte 29 den nach oben gerichteten Zufuhrstutzen 31 und den gegenüberliegenden Abfuhrstutzen 32. Der Kasten 2 wird sodann mit einer pastösen Gipsmasse ausgefüllt, wobei ca. 30% bis 50% deren Masse aus mikroverkapseltem Phasenwechselmaterial besteht. Damit wird dieses über den ganzen Kasteninhalt fein verteilt. Nach dem Auffüllen des Kastens wird die Masse glattgestrichen und härtet dann aus. Am Schluss wird das Element noch mit einem hier nicht dargestellten Deckel aus verzinktem Blech von ca. 0.75mm Stärke von oben verschlossen und an den Rändern vernietet. Hinten ist der Randbereich gegen aussen abgekantet, sodass dort eine Einhängeabkantung gebildet ist, welche die einfache Montage des Elementes an einer Decke erlaubt. Die Montage geht dann wie folgt vonstatten: An die Stutzen 31,32 wird mittels einer Steckverbindung eine flexible Schlauchleitung angeschlossen. Danach wird das Element mit seiner hinteren Abkantung an einer Montageleiste an der Decke eingehängt und hernach werden die vorderen Ecken des Kastens 2 mittels eines Seilzuges an die Decke hochgeschwenkt und befestigt. Die Befestigungswinkel 34 dienen dabei für das Einhängen des Seilzuges und die Befestigung des Kastens 2 an der Decke.

Wie diese thermoaktiven Wand- und Deckenelemente auch ausgeführt sind, sie können in jeder Ausführung zur Erhöhung der Brandfestigkeit mit speziellen, handelsüblichen Brandschutz-Stoffen behandelt werden. So eignet sich etwa eine Brandschutzlackierung, die bei Feuer- und Hitzeeinwirkung eine wärmeisolierende Dämmschicht bildet. Der Kasten kann auch mit einem Brandschutz-Gel zum Beispiel aus wasserhaltigem Alkalisilkat beschichtet sein, mit einem Gewichtsverhältnis von SiO₂ zu Na₂O von 2.7-3.5 und einem Glyzeringehalt von 5-15 Gew.-%. Desweiteren eignen sich für die Beschichtung der Kästen auch feuerhemmende Polyolefine, zum Beispiel aus der Produktelinie Exolit®) von Clariant GmbH in D-65840 Sulzbach. Als Variante kann auch die Gesamtmasse aus Trägermasse und gekapseltem Phasenwechselmaterial mit einem feuerhemmenden Stoff oder mit als Wärmesenke wirkenden Füllstoffen mit hoher Wärmekapazität versetzt sein. Zusätzlich kommt im Brandfall auch die Kühlung der Deckenelemente entweder mit dem integrierten Rohrsystem oder mit einem externen Wassersystem, zum Beispiel mit einer Sprinkleranlage in Frage, welche in wärmeleitendem Kontakt mit den Deckenelementen steht oder gebracht werden kann. Das bringt den Vorteil, dass in einem Brandfall ganze Decken und Wände wirksam gekühlt werden können.

Die Grundidee hinter all diesen thermoaktiven Wand- und Deckenelementen ist es, einen Wärmeaustausch zwischen dem Raum und dem bereitgestellten Wärmespeichermaterial 3 zu ermöglichen, um die Wärme mit Zeitverzug an eine infolge der Temperaturschwankungen zwischen Tag und Nacht später zur Verfügung stehende natürliche Wärmesenke abführen zu können, oder sie bedarfsweise wieder zu nutzen. Dieser Wärmeaustausch macht vor allem zwischen kühlen und heissen Zeitphasen Sinn, also etwa zwischen Tag und Nacht oder in Zeiten von raschen Wärme- oder Kälteeinbrüchen und kurzfristiger Umkehrung. Wird also zum Beispiel tagsüber infolge der Sonneneinstrahlung, des Betriebs von verschiedenen elektrischen Geräten sowie auch durch die Anwesenheit von vielen Menschen einem Raum Wärme zugeführt, so muss gekühlt werden, um die Temperatur nicht über den Komfortbereich hinaus ansteigen zu lassen. Mit den thermoaktiven Wand- und Deckenelementen wird nun eine hocheffiziente Wärmetauschermasse geschaffen, die sonst fehlt. Wegen der niedrigen Schmelztemperatur von 22.5°C des speziell konditionierten PCM wird die durch die Kühldecke abgeleitete Wärme grösstenteils in den Wärmespeicher der Wand- oder Deckenelemente eingelagert, -indem sie das PCM zum Schmelzen bringt. Dieser Prozess hält über mehrere Stunden an, bis das PCM gänzlich verflüssigt ist: Sollte weiterhin Wärme abgeführt werden, so wird diese dann an eine externe Wärmesenke abgegeben. Wenn unvermittelt eine Kaltfront eintrifft und die Raumtemperatur abzusinken droht, wird der Wärmefluss umgekehrt. Das PCM beginnt bei einem geringfügigen Temperaturabfall nämlich zu Erstarren, unter Abgabe seiner latenten Wärme über die dann als Heizdecke wirkenden Sichtdeckenelemente 5 an den Raum. Der Vorgang des Erstarrens tritt auch dann ein, wenn durch das Rohr 1 gekühltes Wasser zirkuliert und dem PCM die latente Wärme entzieht. Grundsätzlich wird also Wärme, die dem Raum durch Kühlung entzogen wurde, in den Wand- und Deckenelementen eingelagert und kann später entweder an eine natürliche Wärmesenke ausserhalb des Raums oder wieder an den Raum abgegeben werden. Weil der Wärmeaustausch langsam erfolgt und sich über mehrere Stunden erstreckt, ist er für die Zwischenspeicherung der Wärme zwischen Tag und Nacht bzw. zwischen Bürobetrieb und Ruhezeiten prädestiniert.

Bei wetterbedingten Extremschwankungen der Temperatur oder grösseren Änderungen der Wärmelasten im Tagesverlauf helfen agiler wirkende Auslegungen dieser thermoaktiven Wand- und Deckenelemente. Bei jenen Ausführungen nämlich, wo das Heiz- und Kühlrohr 1 nicht mit dem Kasten 2 verbunden ist bzw. nicht einstückig aus ihm ausgeformt ist, kann ein Bewegungsmechanismus vorgesehen werden, um das Rippensystem 9 mit dem Sichtdeckenelement 5 zeitweise thermisch vom Kasten 2, welcher ja das Wärmespeicherelement in Form von Phasenwechselmaterial 3 enthält, zu entkoppeln. Das kann etwa elektromechanisch, thermoelektrisch, elektrochemisch, durch ein elektrisches Feld oder hydraulisch erfolgen. Die Antriebsmittel können Elektromotoren, magnetische Kraftzylinder, elektrochemische Aktoren ECA, elektroaktive Polymere EAP, hydraulische Kraftzylinder oder motorisch angetriebene Seilzüge einschliessen. Durch ein Verschieben des Rippensystems 9 um einige mm nach unten oder Abheben eines Wärmekontaktkörpers 24 vom Kasten 2 wie zu Figur 1 und 2 beschrieben wird der Stoffschluss zum Phasenwechselmaterial 3 unterbrochen und der Wärmetransport stark eingeschränkt. In diesem entkoppelten Zustand können dem Raum über die Heiz- und Kühlrohre 1 und die Sichtdeckenelemente 5 innert kurzer Zeit grössere Wärmemengen zugeführt bzw. umgekehrt grössere Wärmemengen aus dem Raum abgeführt werden, sodass also bei Bedarf eine grosse Heiz- und Kühlleistung zur Verfügung steht. Wird etwa hochleistend geheizt, so gelangt die Wärme über die Sichtdeckenelemente 5 direkt in den Raum und nur ein geringer Teil fliesst in das Phasenwechselmaterial 3. Umgekehrt, wenn stark gekühlt wird, so fliesst die Wärme vom Raum in die Sichtdeckenelemente 5 und wird über die Kühlrohre 1 wegtransportiert, ohne dass sie in das Phasenwechselmaterial 3 eingelagert wird. Durch diese Abkopplung der Speicherschicht, das heisst der mit PCM gefüllten Kästen 2 von den eigentlichen Heiz- bzw. Kühlelementen, nämlich der dem Raum zugewandten Sichtdeckenelemente 5, wird das System thermisch flink und verhält sich dadurch ähnlich wie eine konventionelle Kühldecke. In einem Raum, dessen Decke oder Wände ganz oder teilweise mit derartigen thermoaktiven Wand- und Deckenelemente verkleidet sind, kann durch Direktkühlung und - heizung die Temperatur jederzeit rasch auf jeden beliebigen Wert geändert werden. Dadurch ist auch eine Einzelraumregulierung möglich.

## Patentansprüche

1. Thermoaktives Wand- und Deckenelement zum Verbauen in Räumen von Neu- und Altbauten einschließlich Leichtbauten zu deren Temperierung, umfassend
einen geschlossenen Kasten (2), der zur Zwischenspeicherung von Wärme als Latentwärmespeicher ein Phasenwechselmaterial (3) enthält, und
wenigstens ein Heiz- und Kühlrohr (1) zum Steuern des Wärmetausches zwischen dem Kasten (2) und seiner Umgebung;
wobei der Kasten (2) zur Zwischenspeicherung von Wärme das Phasenwechselmaterial (3) auf Normal-Paraffin-Basis oder ein Salzhydrat enthält;
wobei der geschlossene Kasten (2) in seinem Inneren entweder mit Wärmeleitrippen ausgerüstet ist und/oder dem Phasenwechselmaterial Graphit zugesetzt ist;
wobei der Kasten (2) aus einem im Querschnitt rechteckförmigen Profil besteht, das auf beiden Seiten mittels eines aufgeschweißten, aufgelöteten oder aufgeklebten Deckels flüssigkeitsdicht verschlossen ist;
wobei der Kasten (2) auf seiner Unterseite nach unten ragende Lamellen (9) aufweist, zwischen denen ein Schallabsorptionsmaterial (4) eingelegt ist;
wobei in die Unterseite des Kastens (2) ein Kännel (13) eingelassen ist, womit der geschlossene Kasten (2) stoff- und wärmeschlüssig auf das Heiz- und Kühlrohr (1) montiert ist, so dass dieses im Kännel (13) verläuft, und
wobei auf der Unterseite des Kastens (2) direkt oder indirekt kraftschlüssig mit dem Heiz- und Kühlrohr (2) verbunden ein Sichtdeckenelement (5) lösbar an den unteren Rändern der Lamellen (9) befestigt ist und über einen Trägersteg (14) mit dem Heiz- und Kühlrohr (2) verbunden ist.

2. Thermoaktives Wand- und Deckenelement zum Verbauen in Räumen von Neu- und Altbauten einschließlich Leichtbauten zu deren Temperierung, umfassend
einen geschlossenen Kasten (2), der zur Zwischenspeicherung von Wärme als Latentwärmespeicher ein Phasenwechselmaterial (3) enthält, und
wenigstens ein Heiz- und Kühlrohr (1) zum Steuern des Wärmetausches zwischen dem Kasten (2) und seiner Umgebung;
wobei der Kasten (2) zur Zwischenspeicherung von Wärme das Phasenwechselmaterial (3) auf Normal-Paraffin-Basis oder ein Salzhydrat enthält;
wobei der geschlossene Kasten (2) in seinem Inneren entweder mit Wärmeleitrippen ausgerüstet ist und/oder dem Phasenwechselmaterial Graphit zugesetzt ist;
wobei der Kasten (2) aus einem im Querschnitt rechteckförmigen Profil besteht, das auf beiden Seiten mittels eines aufgeschweißten, aufgelöteten oder aufgeklebten Deckels flüssigkeitsdicht verschlossen ist;
wobei der Kasten (2) Stahlwolle umfasst;
wobei in die Unterseite des Kastens (2) ein Kännel (13) eingelassen ist, womit der geschlossene Kasten (2) stoff- und wärmeschlüssig auf das Heiz- und Kühlrohr (1) montiert ist, so dass dieses im Kännel (13) verläuft, und
wobei auf der Unterseite des Kastens (2) direkt oder indirekt kraftschlüssig mit dem Heiz- und Kühlrohr (2) verbunden ein Sichtdeckenelement (5) lösbar an den Rändern des Kastens (2) befestigt ist und über einen Trägersteg (14) mit dem Heiz- und Kühlrohr (2) verbunden ist.

3. Thermoaktives Wand- und Deckenelement nach Anspruch 1 oder 2, **dadurch gekennzeichnet, dass** der Kasten (2) über einen Zu- und Ablaufanschluss mit dem Phasenwechselmaterial (3) befüllbar oder entleerbar ist.

4. Thermoaktives Wand- und Deckenelement nach einem der Ansprüche 1 bis 3, **dadurch gekennzeichnet, dass** der geschlossene Kasten (2) aus einem im Querschnitt rechteckförmigen Blechprofil aus Aluminiumblech, Stahlblech, Chromstahl oder einem Buntmetallblech besteht, wobei das Blechprofil auf beiden Seiten mittels eines aufgeschweissten, aufgelöteten oder aufgeklebten Deckels flüssigkeitsdicht verschlossen ist.

5. Thermoaktives Wand- und Deckenelement nach einem der Ansprüche 1 bis 3, **dadurch gekennzeichnet, dass** der geschlossene Kasten (2) aus einem im Querschnitt rechteckförmigen Kunststoff-Profil besteht, das auf beiden Seiten mittels eines aufgeschweissten oder aufgeklebten Deckels flüssigkeitsdicht verschlossen ist.

6. Thermoaktives Wand- oder Deckenelement nach einem der Ansprüche 1 bis 5, **dadurch gekennzeichnet, dass** das Phasenwechselmaterial (3) im Kasten (2) aus mit Paraffin gefüllten Mikrokapseln besteht, die in einer Gipsmasse dispergiert sind, so dass sie 30% bis 50% des Massenanteils der gesamten Endmasse ausmachen.

7. Thermoaktives Wand- und Deckenelement nach einem der Ansprüche 1 bis 6, **dadurch gekennzeichnet, dass** als Brandschutzvorkehrung der Kasten (2) mindestens außen mit einem flammhemmenden Stoff in Form eines Brandschutz-Gels oder einer Brandschutz-Lackierung beschichtet ist.

8. Thermoaktives Wand- und Deckenelement nach einem der Ansprüche 1 bis 7, **dadurch gekennzeichnet, dass** als Brandschutzvorkehrung die Gesamtmasse aus Trägermasse und gekapseltem Phasenwechselmaterial (3) mit einem feuerhemmenden Stoff oder mit als Wärmesenke wirkenden Füllstoffen mit hoher Wärmekapazität versetzt ist.

## Claims

1. Thermoactive wall and ceiling element for installation into rooms of new and old buildings including lightweight constructions for moderating their temperature comprising
a closed box (2) containing a phase transition material (3) for the intermediate storage of heat as a latent heat storage means, and
at least one heating and cooling pipe (1) for controlling the heat exchange between the box (2) and its surroundings;
wherein the box (2) for the intermediate storage of heat contains the phase transition material (3) based on a normal paraffin or a salt hydrate;
wherein the closed box (2) is equipped on its inside either with thermally conductive fins and/or graphite is added to the phase-change material;
wherein the box (2) is made of a profile with a rectangular cross-section which is closed liquid-tight by means of a cover welded, brazed or bonded onto both sides of it;
wherein the box (2) is provided on its underside with fins (9) extending downwards between which sound-absorbent material (4) is placed; wherein a channel (13) is recessed into the underside of the box (2) by means of which the closed box (2) is integrally mounted on, and thermally coupled to, the heating and cooling pipe (1) so that the pipe runs within this channel (13), and
wherein on the underside of the box (2), positively connected directly or indirectly to the heating or cooling pipe (1), a visible ceiling element (5) is secured detachably to the lower edges of the fins (9) and connected to the heating and cooling pipe (1) via a bearer (14).

2. Thermoactive wall and ceiling element for installation into rooms of new and old buildings including lightweight constructions for moderating their temperature comprising
a closed box (2) containing a phase transition material (3) for the intermediate storage of heat as a latent heat storage means, and
at least one heating and cooling pipe (1) for controlling the heat exchange between the box (2) and its surroundings;
wherein the box (2) for the intermediate storage of heat contains the phase transition material (3) based on a normal paraffin or a salt hydrate;
wherein the closed box (2) is equipped on its inside either with thermally conductive fins and/or graphite is added to the phase transition material;
wherein the box (2) is made of a profile of rectangular cross-section which is closed liquid-tight by means of a cover welded, brazed or bonded onto both sides of it;
wherein the box (2) contains steel wool;
wherein a channel (13) is recessed into the underside of the box (2) by means of which the closed box (2) is integrally mounted on, and thermally coupled to, the heating and cooling pipe (1) so that the pipe runs within this channel (13), and
wherein on the underside of the box (2), positively connected directly or indirectly to the heating or cooling pipe (1), a visible ceiling element (5) is secured detachably to the lower edges of the fins (9) and connected to the heating and cooling pipe (1) via a bearer (14).

3. Thermoactive wall and ceiling element according to Claim 1 or 2 **characterised in that** the box (2) can be filled with, or evacuated of, the phase transition material (3) via a supply and drainage connection.

4. Thermoactive wall and ceiling element according to one of the claims 1 to 3 **characterised in that** the closed box (2) comprises a sheet-metal profile with rectangular cross-section out of aluminium, sheet steel, chrome steel or a non-ferrous sheet metal wherein the sheet-metal profile is closed liquid-tight on both sides by means of a cover welded, brazed or bonded onto it;

5. Thermoactive wall and ceiling element according to one of the claims 1 to 3 **characterised in that** the closed box (2) comprises a plastic profile with rectangular cross-section which is closed liquid-tight on both sides by means of a cover welded or bonded onto both sides of it.

6. Thermoactive wall and ceiling element according to one of the claims 1 to 5 **characterised in that** the phase transition material (3) in the box (2) comprises microcapsules filled with paraffin which are dispersed in a plaster mass so that they constitute 30% to 50% by weight of the total mass.

7. Thermoactive wall and ceiling element according to one of the claims 1 to 6 **characterised in that**, as a fire-protection precaution, the closed box (2) has at least on the outside an anti-inflammatory material in the form of a non-inflammable coating or fire protection paint.

8. Thermoactive wall and ceiling element according to one of the claims 1 to 7 **characterised in that**, as a fire-protection precaution, the entire mass of carrier mass and encapsulated phase transition material (3) has a fire-retarding material added to it or has a filler material with heat-reducing qualities with high heat capacity added to it.

## Revendications

1. Élément de mur et de plafond thermoactif destiné à l'installation dans des locaux de bâtiments neufs et anciens, y compris des constructions légères pour leur régulation en température, comprenant un caisson fermé (2) qui contient un matériau à changement de phase (3) pour le stockage intermédiaire de chaleur, à titre d'accumulateur de chaleur latente, et
au moins un tuyau de chauffage et de refroidissement (1) pour diriger l'échange de chaleur entre le caisson (2) et son environnement ;
dans lequel le caisson (2) contient un matériau à changement de phase (3) à base de paraffine normale ou d'un hydrate de sel pour l'accumulation intermédiaire de chaleur;
dans lequel le caisson fermé (2) est équipé de nervures de conduction thermique dans son intérieur et/ou du graphite est ajouté au matériau à changement de phase ;
dans lequel le caisson (2) est constitué par un profilé à section rectangulaire qui est refermé sur ses deux côtés de manière étanche aux fluides au moyen d'un couvercle rapporté par soudure, par brasage ou par collage;
dans lequel le caisson (2) comprend sur sa face inférieure des lamelles (9) dépassant vers le bas, et entre lesquelles est inclus un matériau d'absorption acoustique (4);
dans lequel une gouttière (13) est intégrée dans la face inférieure du caisson (2), grâce à laquelle le caisson fermé (2) peut être monté sur le tuyau de chauffage et de refroidissement (1) à coopération de matière et à coopération thermique, de sorte que ce tuyau passe dans la gouttière (13), et
dans lequel un élément de fermeture d'aspect (5) est fixé sur les bordures inférieures des lamelles (9) à la face inférieure du caisson (2) en étant relié directement ou indirectement à coopération de force avec le tuyau de chauffage et de refroidissement (1), et est relié au tuyau de chauffage et de refroidissement (1) via une barrette porteuse (14).

2. Élément de mur et de plafond thermoactif destiné à l'installation dans des locaux de bâtiments neufs et anciens, y compris des constructions légères, pour leur régulation en température, comprenant un caisson fermé (2) qui contient un matériau à changement de phase (3) pour le stockage intermédiaire de chaleur, à titre d'accumulateur de chaleur latente, et
au moins un tuyau de chauffage et de refroidissement (1) pour diriger l'échange de chaleur entre le caisson (2) et son environnement ; dans lequel le caisson (2) contient un matériau à changement de phase (3) à base de paraffine normale ou d'un hydrate de sel pour l'accumulation intermédiaire de chaleur;
dans lequel le caisson fermé (2) est équipé de nervures de conduction thermique dans son intérieur et/ou du graphite est ajouté au matériau à changement de phase ;
dans lequel le caisson (2) est constitué par un profilé à section rectangulaire qui est refermé sur ses deux côtés de manière étanche aux fluides au moyen d'un couvercle rapporté par soudure, par brasage ou par collage ;
dans lequel le caisson (2) contient de la laine d'acier ;
dans lequel une gouttière (13) est intégrée dans la face inférieure du caisson (2), grâce à laquelle le caisson fermé (2) peut être monté sur un tuyau de chauffage et de refroidissement (1) à coopération de matière et à coopération thermique, de sorte que ce tuyau passe dans la gouttière (13), et
dans lequel un élément de fermeture visible (5) est fixé sur les bordures inférieures des lamelles (9) à la face inférieure du caisson (2) en étant relié directement ou indirectement à coopération de force avec le tuyau de chauffage et de refroidissement (1), et est relié au tuyau de chauffage et de refroidissement (1) via une barrette porteuse (14).

3. Élément de mur et de plafond thermoactif selon la revendication 1 ou 2, **caractérisé en ce que** le caisson (2) est susceptible d'être rempli ou vidé avec le matériau à changement de phase (3) via un raccord d'alimentation et d'évacuation.

4. Élément de mur et de plafond thermoactif selon l'une des revendications 1 à 3, **caractérisé en ce que** le caisson fermé (2) est constitué d'un profilé de tôle à section de forme rectangulaire, en tôle d'aluminium, en tôle d'acier, en tôle de chrome, ou en tôle métallique mixte, dans lequel le profilé en tôle est refermé de manière étanche aux liquides sur les deux côtés au moyen d'un couvercle rapporté par soudure, par brasage ou par collage.

5. Élément de mur et de plafond thermoactif selon l'une des revendications 1 à 3, **caractérisé en ce que** le caisson fermé (2) est constitué d'un profilé en matière plastique à section de forme rectangulaire, qui est refermé de façon étanche aux liquides sur les deux côtés au moyen d'un couvercle rapporté par soudure ou par collage.

6. Élément de mur et de plafond thermoactif selon l'une des revendications 1 à 5, **caractérisé en ce que** le matériau à changement de phase (3) dans le caisson (2) est constitué de microcapsules remplies de paraffine, qui sont dispersées dans une masse de plâtre, de sorte qu'elles constituent 30 % à 50 % de la masse en proportion de la masse finale totale.

7. Élément de mur et de plafond thermoactif selon l'une des revendications 1 à 6, **caractérisé en ce que** le caisson (2), à titre de protection anti-incendie, est revêtu au moins à l'extérieur d'un matériau ignifuge sous la forme d'un gel ou d'une peinture anti-incendie.

8. Élément de mur et de plafond thermoactif selon l'une des revendications 1 à 7, **caractérisé en ce que**, à titre de protection anti-incendie, la masse totale constituée de la masse porteuse et du matériau à changement de phase encapsulé (3) est mélangé avec un matériau ignifuge ou avec des agents de charge à effet thermo-dépresseur présentant une haute capacité thermique.
